# FASCICULE DE BREVET EUROPEEN

(11) **EP 1 878 927 B1**
(45) Date de publication et mention de la délivrance du brevet: **12.09.2012**
(21) Numéro de dépôt: 07290868.4
(22) Date de dépôt: 10.07.2007
(51) Int. Cl.: F16B 37/04

(54) **Ecrou moulé sécable et pièce moulée avec un tel écrou**
Teilbare Gussmutter und Gussteil mit einer solchen Mutter
Dryable die cast nut and part die cast with such a nut

(30) Priorité: 12.07.2006 FR 0652939
(43) Date de publication de la demande: 16.01.2008
(73) Titulaire: Lisi Automotive Rapid, 95650 Puiseux Pontoise (FR)
(72) Inventeur: Viennois, Fabien, 92800 Puteaux (FR)
(74) Mandataire: Thinat, Michel

(56) Documents cités:
- WO-A-03/085274
- DE-A1- 19 650 864
- DE-U1- 7 803 166
- US-A- 3 493 254

## Description

La présente invention concerne un écrou moulé en une seule pièce avec une première pièce destinée à être assemblée avec une ou plusieurs autres pièces ainsi qu'une pièce moulée avec un tel écrou et un procédé d'assemblage d'une telle pièce avec d'autres pièces.

Pour la fixation par vissage d'un objet sur un panneau, on utilise par exemple des écrous à cage supportés par le panneau ou des écrous solidaires du panneau, lorsque l'arrière du panneau n'est pas accessible et que l'on ne peut donc pas maintenir l'écrou par un outil pendant l'introduction et le serrage d'une vis dans cet écrou. Aussi répandue et simple l'utilisation d'un tel moyen de fixation soit, il n'en reste pas moins que l'écrou et la cage forment deux pièces qui sont à mettre en place avant la pose du panneau. De tels moyens de fixation sont connus par exemple du document WO-A-03/085274. De plus, les écrous à cage sont généralement entièrement en métal ou comportent pour le moins une cage métallique. Or, aussi bien dans le domaine de l'automobile que dans celui de l'électroménager et dans bien d'autres, la part de pièces réalisées en matière plastique augmente sans cesse. Il serait utile de pouvoir utiliser aussi de plus en plus d'éléments de fixation en matière plastique.

De plus, il serait souhaitable de pouvoir s'affranchir des désavantages des moyens de fixation par vissage décrits plus haut et, d'une manière générale, de disposer de moyens de fixation par vissage plus faciles à manipuler.

Le but de l'invention est de proposer un moyen de fixation permettant d'assembler, par vissage, au moins deux pièces disposées de manière que seul la face avant de l'ensemble formé par ces deux ou davantage de pièces est accessible.

De tels moyens de fixation sont connus par exemple du document US-A-3 493 254. Toutefois, ces moyens demandent un outillage spécifique pour leur fixation et, de plus, une fois fixés, ces moyens ne peuvent pas être démontés sans endommager les piéces assemblées.

Le but de l'invention est atteint avec un écrou selon la revendication 1.

Grâce aux dispositions de l'invention, il est facile de poser et fixer une première pièce, par exemple un support, sur une seconde pièce, par exemple un panneau d'habillage intérieur d'un véhicule automobile, préalablement mise en place ou sur une paroi d'un boîtier d'un appareil électroménager.

Par ailleurs, l'invention contribue à simplifier la conception et la réalisation des panneaux qui, une fois posés, ne sont accessibles que de leur face avant.

En effet, puisque l'écrou est embarqué sur la pièce qui est destinée à être assemblée avec une ou plusieurs autres pièces préalablement mises en place, et non pas sur la pièce (ou la dernière des pièces) déjà mise en place, il est maintenant possible d'assembler ces pièces, par une opération de vissage, sans avoir à placer d'abord l'écrou et à le maintenir ensuite, pendant le serrage de la vis, par le côté arrière de la pièce déjà en place. Ceci apporte un gain de temps assez important pour le montage des pièces.

En effet, l'écrou de l'invention est moulé en même temps que la première pièce sur laquelle il est embarqué. L'écrou et la première pièce sont donc réalisés en monobloc, c'est-à-dire comme un élément unique. Toutefois, l'écrou est maintenu sur la première pièce par des parties sécables. Lors de la mise en place de la première pièce par rapport à la ou les autres pièces avec lesquelles elle doit être assemblée à l'aide de cet écrou et une vis correspondante, l'écrou est attrapé, à sa partie de liaison et d'arrêt, par au moins une des découpes faites à cet effet dans les pièces à assembler avec la première pièce. Lors de l'opération de vissage de la vis dans l'écrou, la vis entraîne d'abord l'écrou et, en forçant sur les parties sécables, sépare l'écrou de la première pièce en cassant les parties sécables. Une fois l'écrou libéré, il tourne, dans le sens de vissage, jusqu'à ce que l'un de ses côtés se mette en appui sur le bord de la découpe d'au moins une des pièces à assembler. Une fois l'écrou arrêté en rotation, la vis peut être mise en tension.

Par ailleurs, l'écrou de l'invention est conçu de manière que, sans sortir du principe de la présente invention, la deuxième pièce et d'autres pièces éventuelles peuvent être disposées, par rapport à la première pièce, aussi bien du côté de l'écrou que du côté de la tête de vis.

En effet, il est concevable qu'une première pièce, porteuse de l'écrou de l'invention et ayant une forme en L comme celle de la première pièce évoquée dans les dessins annexés, doit être montée, avec la partie portant l'écrou, derrière un profilé de structure, laissant alors apparaître l'autre partie du L perpendiculairement par rapport à un panneau d'habillage monté (ou également à monter) sur le profilé. Si l'accès à l'arrière du panneau est impossible, on n'a pas besoin, en utilisant la présente invention, de fixer préalablement un écrou sur l'arrière de la première pièce. Car l'écrou est une partie intégrante de la première pièce.

Pour l'application évoquée en premier, la ou les autres pièces sont pourvues d'une découpe dont la forme est adaptée à celle du corps de l'écrou afin que celui-ci puisse traverser la ou les autres pièces au moment de l'assemblage avec la première pièce et puisse être situé derrière l'autre, ou la dernière des autres, pièce. L'actionnement de la vis entraîne alors l'écrou, comme indiqué plus haut, en un début de rotation jusqu'à ce que les liaisons sécables se déchirent et que l'écrou ainsi libre puisse être emmené en rotation d'un quart de tour, comme cela sera décrit en davantage de détails plus loin en référence aux dessins annexés. Le corps d'écrou sera alors disposé transversalement par rapport à l'étendue longitudinale de la découpe, à la façon d'une brochette de verrouillage. L'écrou ainsi arrêté en rotation, la poursuite de l'actionnement de la vis sert à serrer la liaison de vissage.

Dans l'application alternative évoquée plus haut, selon laquelle la ou les autres pièces sont disposées du côté de la tête de vis et non pas de l'écrou de l'invention, le fonctionnement du détachement de l'écrou et le vissage sont les mêmes comme ci avant. Seulement, la découpe dans la première pièce n'est pas adaptée à la forme du corps d'écrou, mais à la forme de la partie de liaison et d'arrêt de l'écrou.

La présente invention s'applique principalement à des écrous embarqués sur une pièce réalisée en le même matériau que l'écrou. Cependant, il est également possible, sans sortir du principe de la présente invention, que l'écrou soit réalisé en un autre matériau que celui de la première pièce, mais qu'il soit intégré dans la première pièce lors du moulage de cette dernière.

Le but de l'invention est également atteint avec une pièce selon la revendication 4.

La pièce de l'invention peut avoir l'une ou l'autre des caractéristiques supplémentaires ci-après, considérées séparément ou selon toute combinaison techniquement possible :
- la pièce est pourvue d'une ouverture ou découpe conformée pour pouvoir recevoir, en cours d'assemblage des pièces à assembler, la partie de liaison et d'arrêt de l'écrou ;
- avant toute réalisation d'un assemblage avec une ou plusieurs autres pièces, la vis est engagée dans l'écrou seulement partiellement de manière à ne pas être en appui sur la première pièce.

Le but de l'invention est également atteint avec un ensemble de pièces à assembler, qui comprend une première pièce selon la description ci avant et au moins une autre pièce, la ou chacune des autres pièces à assembler avec la première pièce étant pourvues d'une découpe adaptée à la forme de l'écrou.

Et le but de l'invention est également atteint avec un procédé d'assemblage selon la revendication 7.

D'autres caractéristiques et avantages de la présente invention ressortiront de la description ci-après d'un mode de réalisation de l'invention. Cette description est faite en référence aux dessins annexés dans lesquels :
- la figure 1 représente, en une vue en perspective, une première pièce porteuse d'un écrou de l'invention,
- la figure 2 représente une vue simplifiée en élévation de l'écrou sur un petit côté,
- la figure 3 représente une vue de dessus de l'écrou de l'invention,
- la figure 4 représente une seconde pièce destinée à être assemblée avec la première pièce moyennant l'écrou de l'invention,
- la figure 5 montre, à la fois en coupe axiale et en vue de dessus, la disposition d'un écrou de l'invention mise en place pour l'assemblage d'une première pièce porteuse de l'écrou avec une seconde pièce,
- la figure 6 montre, à la fois en une coupe axiale et en vue de dessus, un état intermédiaire de l'assemblage de deux pièces moyennant un écrou de l'invention et
- la figure 7 montre, également en une coupe axiale et en vue de dessus, la position de l'écrou de l'invention dans deux pièces assemblées moyennant cet écrou.

La présente invention sera décrite ci-après à l'aide d'un exemple de réalisation selon lequel une première pièce moulée 2 est destinée à, et conformée pour, être montée en saillie sur une seconde pièce 3 constituée par un panneau ou une tôle 3.

La pièce 2 est pourvue d'un écrou 1 moulé en une seule pièce, c'est-à-dire monobloc, avec la première pièce 2. L'écrou 1 est disposé sur la première pièce 2 de manière à pouvoir coopérer avec une vis 4 destinée à traverser l'ensemble des pièces à assembler.

L'écrou 1 comprend un corps d'écrou 11 et une partie de liaison et d'arrêt 12 taraudée qui est solidaire du corps d'écrou 11 et attaché à la première pièce 2 par des liens sécables 13, 14.

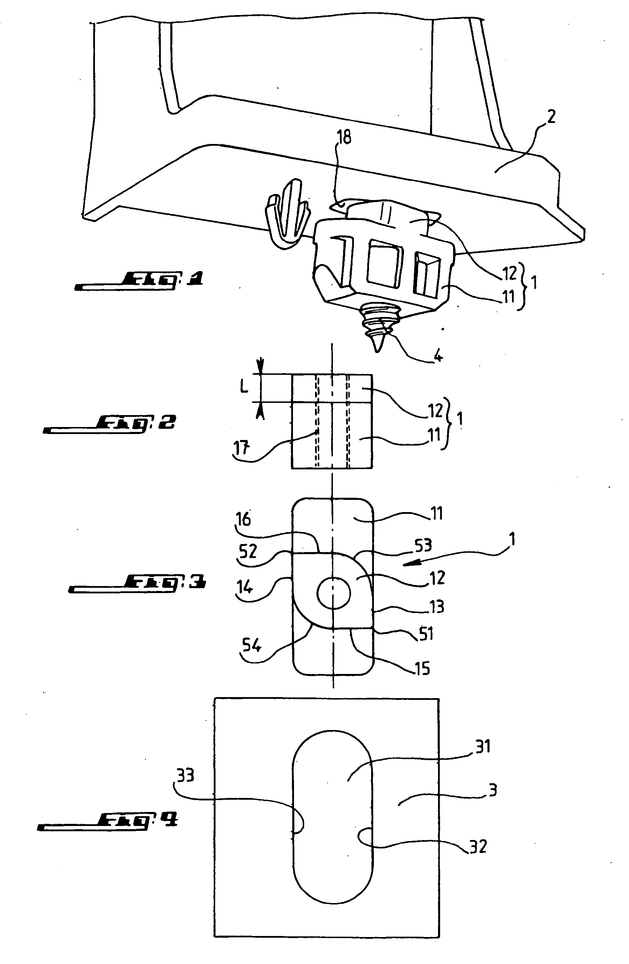

Alors que la figure 1 montre la disposition de l'écrou 1 sur la première pièce 2 avec une vis 4 introduite dans l'écrou 1 et dépassant de celui-ci, la figure 2 montre, à titre d'exemple, les proportions axiales du corps d'écrou 11 et de la partie de liaison et d'arrêt 12. Dans l'exemple choisi, la longueur axiale L de la partie de liaison et d'arrêt 12 est nettement inférieure à la longueur axiale du corps d'écrou 11. Toutefois, la longueur axiale L de la partie de liaison et d'arrêt 12 doit être choisie en fonction de l'épaisseur de la ou des autres pièces avec laquelle la première pièce 2 doit être assemblée. En effet, la longueur axiale L de la partie de liaison et d'arrêt 12 doit être suffisamment grande pour que le corps d'écrou puisse traverser entièrement une ou des découpes 31 pratiquées à cet effet dans la ou chacune des autres pièces 3 à assembler. De plus, la longueur axiale L de la partie de liaison et d'arrêt 12 doit être suffisamment grande pour qu'elle puisse pénétrer, par l'action de la vis 4 sur l'écrou 1, pour le moins partiellement dans une découpe 18 pratiquée à cet effet dans la première pièce.

La figure 2 montre également que, avantageusement, l'écrou 1 est taraudé sur sa longueur axiale entière.

En ce qui concerne la forme et la longueur de la vis 4, et en ce qui concerne notamment la coopération entre le filetage de la vis 4 et un taraudage 17 de l'écrou 1 pour la transmission de la force de rotation de la vis 4 sur l'écrou 4, il y a essentiellement deux possibilités. Selon la première, représentée sur les dessins, la vis 4 a un filetage à diamètre constant sur toute sa longueur. Pour assurer une stabilité axiale suffisante de la vis 4 dans l'écrou 1, le nombre de filets de l'écrou peut être déterminé de manière que le frottement entre le taraudage 17 de l'écrou 1 et le filetage de la vis 4 ne soit suffisamment grande pour assurer une transmission du mouvement de rotation de la vis sur l'écrou, que lorsque la vis est introduite suffisamment loin dans l'écrou, par exemple jusqu'à ce que la pointe de la vis commence à sortir de l'autre côté de l'écrou.

La figure 3 montre la disposition des parties sécables 13, 14 par lesquelles l'écrou 1 est attaché à la première pièce 2 ainsi que la disposition initiale de moyens 15, 16 permettant de limiter la rotation de l'écrou 1.

La partie de liaison et d'arrêt 12 de l'écrou 1 présente une forme cylindrique à section transversale symétrique délimitée à l'extrémité libre de cette partie 12 par quatre bords droits et deux bords courbes représentant chacun une surface correspondante, plane ou courbe, s'étendant sur toute la longueur axiale L de la partie de liaison et d'arrêt 12 de l'écrou 1. Deux des faces planes, s'étendant dans des plans parallèles à l'étendue longitudinale de la section transversale du corps d'écrou 11, sont attachées à la première pièce 2 par leur bord libre respectif, référencés 13 et 14 sur les figures 3, 5 et 6 et réalisés comme liaisons sécables sous forme de films.

Les deux autres faces planes de la partie de liaison et d'arrêt 12, représentées par les bords droits 15, 16, s'étendent perpendiculairement par rapport aux faces représentées par les bords 13, 14. Les bords 13 et 15, d'une part, et les bords 14 et 16 d'autre part, qui représentent chacun une face correspondante de la partie de liaison et d'arrêt 12, se rejoignent en des points 51, 52 diamétralement opposés par rapport à l'axe du taraudage 17.

En contrepartie, les bords 13 et 16, d'une part, et les bords 14 et 15, d'autre part, se rejoignent par des bords courbes correspondants 53, 54 indiqués sur la figure 3, tout comme les faces correspondantes de la partie de liaison et d'arrêt 12, se rejoignent par des faces courbes, ici approximativement à section transversale à quart de cercle.

Cette forme particulière rappelant approximativement celle d'une came d'un moyen de commande mécanique, de la section transversale de la partie de liaison et d'arrêt 12 avec deux angles diamétralement opposés rectangulaires et deux autres « angles », également diamétralement opposés, arrondis assure, ensemble avec des bords parallèles 32, 33 d'une découpe 31 pratiquée dans la seconde pièce 3, la fonction de moyens limitant la rotation de l'écrou lors de l'assemblage de la première pièce 2 avec la seconde pièce 3.

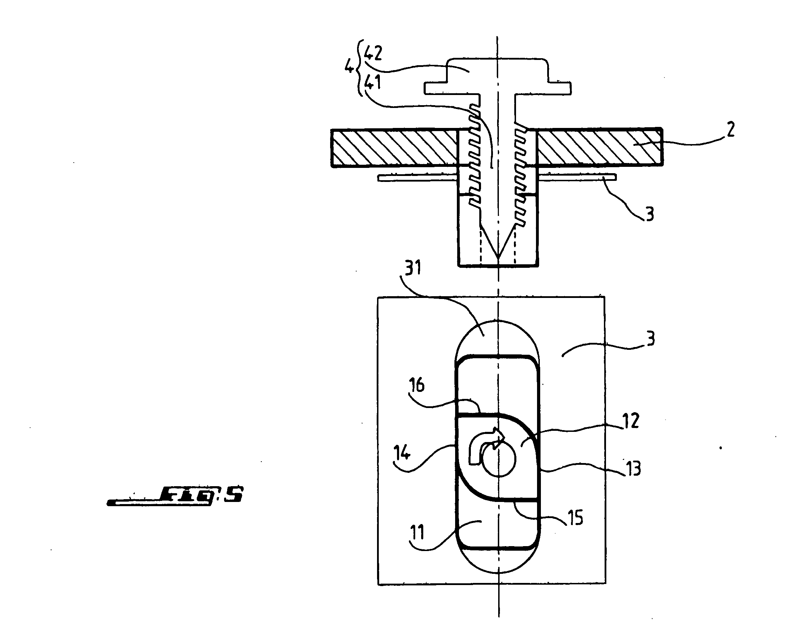

En effet, comme cela est représenté sur la suite cinématique des figures 5 à 7, et d'abord sur la figure 5, la première pièce 2 est posée sur la seconde pièce 3 de manière que l'écrou 1 puisse traverser la découpe 31 pratiquée dans la seconde pièce 3. La première pièce 2 est avancée pour le moins jusqu'à ce que la partie de liaison et d'arrêt 12 se trouve à l'intérieur de la découpe 31 de la seconde pièce 3. La figure 5 représente cette situation avec une faible distance axiale entre les deux pièces 2 et 3, pour montrer qu'il n'est pas nécessaire que la première pièce 2 soit en contact avec la seconde pièce 3 pour profiter des dispositions de l'invention.

Lorsque l'écrou 1 a traversé la pièce 3 et la partie de liaison et d'arrêt 12 de l'écrou 1 se trouve à l'intérieur de la découpe 31 de la seconde pièce 3, les parties sécables 13, 14 sont encore intactes et l'écrou 1 est encore solidaire de la première pièce 2. En même temps, les faces planes qui s'étendent à partir du corps d'écrou 11 vers les parties sécables 13, 14 sont en contact avec les bords intérieurs parallèles 32, 33 et le corps d'écrou 11 est dans sa position d'introduction de l'écrou dans la découpe 31, c'est-à-dire orienté dans le même sens que la découpe 31.

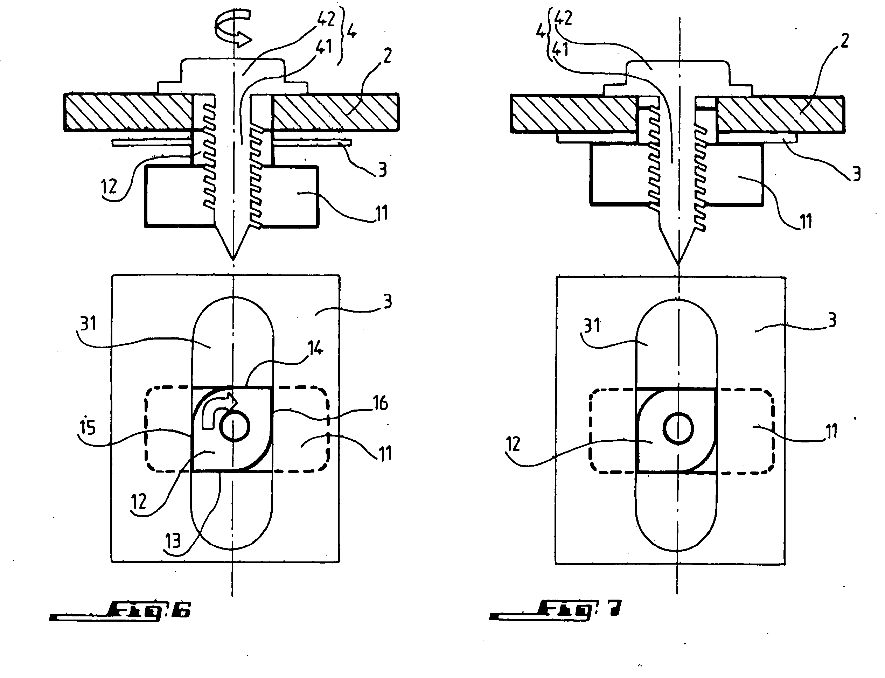

Lorsque le monteur qui doit assembler la première pièce 2 avec la seconde pièce 3 fait tourner la vis 4, la vis 4 entraîne avec elle l'écrou 1. Ceci est possible grâce à la forme arrondie des bords 53, 54 et la forme essentiellement cylindrique des faces correspondantes de la partie 12, mais seulement jusqu'à ce que les faces planes de la partie de liaison et d'arrêt 12 auxquelles correspondent les bords 15, 16, se trouvent en contact avec les bords intérieurs 32, 33 de la découpe 31. En effet, une poursuite de la rotation de l'écrou 1 n'est pas possible puisque les angles 51, 52 de la partie de liaison et d'arrêt 12 et les arêtes qui leur correspondent, n'ont pas de forme arrondie cylindrique, ce qui fait que les bords intérieurs 32, 33 de la découpe 31 arrêtent la rotation de l'écrou 1. A partir de ce moment, la poursuite de l'action de vissage avec un corps d'écrou 11 orienté transversalement par rapport à l'orientation de la découpe 31, se poursuit avec, pour effet, de rapprocher l'écrou 1 de la première pièce 2 jusqu'à ce que les pièces 2 et 3 soient venues en contact l'une avec l'autre et que la tête de vis 42 soit en appui sur la première pièce 2. Cette situation de fin d'assemblage est représentée sur la figure 7.

Il est intéressant de noter ici que les dispositions de l'invention permettent aussi un démontage de la première pièce 2 par dévissage. Lors d'un dévissage, et après que les deux pièces 2, 3 aient été desserrées, l'écrou est entraîné en rotation d'un quart de tour dans le sens de dévissage jusqu'à ce que les faces planes de la partie de liaison et d'arrêt 12 auxquelles correspondent les bords 13, 14 viennent en appui contre des bords intérieurs 32, 33 de la découpe 31 de la seconde pièce 3, ce qui arrête la rotation de l'écrou 1 et permet le dévissage de la vis 4 jusqu'à ce que la première pièce 2 puisse être détachée de la seconde pièce 3. Par la suite, une nouvelle pièce 2 peut être montée sur la pièce 3, ce qui permet donc un remplacement aisé de la première pièce 2 au titre d'une réparation par remplacement de la première pièce 2.

## Revendications

1. Ecrou (1) moulé en une seule pièce avec une première pièce (2) destinée à être assemblée avec une ou plusieurs autres pièces (3), l'écrou (1) étant disposé en saillie sur la première pièce (2) de manière à pouvoir coopérer avec une vis (4) destinée à traverser l'ensemble des pièces (2, 3) à assembler, **caractérisé en ce que** l'écrou (1) comprend un corps d'écrou (11) et une partie de liaison et d'arrêt (12) solidaire du corps d'écrou (11) et attachée à la première pièce (2) par des liens sécables (13, 14), la partie de liaison et d'arrêt (12) étant taraudée, ou comportant un trou destiné à être taraudé par l'insertion de la vis, et comportant des moyens (15, 16) destinés à coopérer avec des moyens complémentaires (32, 33) prévus sur la première pièce (2) ou une des autres pièces (3) afin de limiter la rotation de l'écrou (1) après son détachement de la première pièce (2), à un quart de tour, de telle manière que l'écrou (1) adopte une position relativement à l'ensemble des pièces (2, 3) qui en empêche la séparation.

2. Ecrou selon la revendication 1, **caractérisé en ce que** le taraudage (17) de la partie de liaison et d'arrêt (12) est conformé pour que la vis (4), lorsqu'elle est engagée dans le taraudage (17), vienne se mettre en appui sur la première pièce (2), puis par tension casse les liens sécables (13, 14) de l'écrou (1) afin d'entraîner l'écrou (1) en rotation.

3. Ecrou selon la revendication 1 ou 2, **caractérisé en ce qu'**il est réalisé en le même matériau que la première pièce (2).

4. Pièce (2) destinée à être assemblée avec une ou plusieurs autres pièces (3), **caractérisé en ce qu'**elle est pourvue d'un écrou (1) moulé en une seule pièce avec elle et disposé en saillie sur elle de manière à pouvoir coopérer avec une vis (4) destinée à traverser l'ensemble des pièces (2, 3) à assembler, et **en ce que** l'écrou (1) comprend un corps d'écrou (11) et une partie de liaison et d'arrêt (12) taraudée, ou comportant un trou destiné à être taraudé par l'insertion de la vis, et solidaire du corps d'écrou (11) et attachée à la pièce (2) par des liens sécables (13, 14), la partie de liaison et d'arrêt (12) comportant des moyens (15, 16) destinés à coopérer avec des moyens complémentaires (32, 33) prévus sur la pièce (2) ou une des autres pièces (3) afin de limiter la rotation de l'écrou (1) après son détachement de la pièce (2) à un quart de tour, de telle manière que l'écrou (1) adopte une position relativement à l'ensemble des pièces (2, 3) qui en empêche la séparation.

5. Pièce selon la revendication 4, **caractérisée en ce qu'**elle (2) est pourvue d'une ouverture (18) conformée pour pouvoir recevoir, en cours d'assemblage des pièces à assembler, la partie de liaison et d'arrêt (12) de l'écrou (1).

6. Ensemble de pièces à assembler, **caractérisé en ce qu'**il comprend une première pièce (2) selon la revendication 4 ou 5 et au moins une autre pièce (3), la ou chacune des autres pièces (3) à assembler avec la première pièce (2) étant pourvues d'une découpe (31) adaptée à la forme de l'écrou (1).

7. Procédé d'assemblage d'une première pièce (2) selon la revendication 4 ou 5 avec une ou plusieurs autres pièces (3), la ou chacune (3) des autres pièces (3) étant pourvues d'une découpe (31) adaptée à la forme de l'écrou (1) et comportant des bords intérieurs (32, 33) constituant les moyens complémentaires avec lesquels les moyens (15, 16) de l'écrou (1) limitent la rotation de l'écrou (1) à un quart de tour, le procédé comprenant au moins les étapes suivantes :
poser la première pièce (2) sur la ou les autres pièces (3) à assembler, avec introduction de l'écrou (1) dans la découpe (31) de la ou de chacune des autres pièces (3) à assembler,
visser la vis (4) dans le taraudage (17) de l'écrou (1) ou tarauder le trou de l'écrou (1) au moyen de la vis (4), puis
serrer la vis (4) d'un quart de tour afin d'obtenir la rupture des liens sécables (13, 14) et puis l'arrêt en rotation de l'écrou (1),
serrage final de la vis (4).

8. Procédé selon la revendication 7, **caractérisé en ce que**, avant toute réalisation d'un assemblage avec une ou plusieurs autres pièces (3), la vis (4) est engagée dans l'écrou (1) seulement partiellement de manière à ne pas être en appui sur la première pièce (2).

## Claims

1. A die cast nut (1) cast in a single piece with a first part (2) designed to be assembled with one or more other parts (3), the nut (1) being positioned protruding on the first part (2) so as to be able to cooperate with a screw (4) designed to pass through all of the parts (2, 3) to be assembled, **characterized in that** the nut (1) comprises a nut body (11) and a connecting and stop portion (12) secured to the nut body (11) and attached to the first part (2) by separable connections (13, 14), the connecting and stop portion (12) being tapped, or including a hole designed to be tapped by inserting the screw, and including means (15, 16) designed to cooperate with complementary means (32, 33) provided on the first part (2) or one of the other parts (3) so as to limit the rotation of the nut (1) after it is detached from the first part (2) to one quarter revolution, such that the nut (1) adopts a position relative to all of the parts (2, 3) that prevents the separation thereof.

2. The nut according to claim 1, **characterized in that** the tapping (17) of the connecting and stop portion (12) is configured so that when the screw (4) is engaged in the tapping (17), it bears on the first part (2), then breaks the separable connections (13, 14) of the nut (1) by tension so as to rotate the nut (1).

3. The nut according to claim 1 or 2, **characterized in that** it is made from the same material as the first part (2).

4. A part (2) designed to be assembled with one or more other parts (3), **characterized in that** it is provided with a nut (1) die cast in a single piece therewith and positioned protruding thereon so as to be able to cooperate with a screw (4) designed to pass through all of the parts (2, 3) to be assembled, and **in that** the nut (1) comprises a nut body (11) and a tapped connecting and stop portion (12), or having a hole designed to be tapped by inserting the screw, and secured to the nut body (11) and attached to the part (2) by separable connections (13, 14), the connecting and stop portion (12) having means (15, 16). designed to cooperate with complementary means (32, 33) provided on the part (2) or one of the other parts (3) so as to limit the rotation of the nut (1) after it is detached from the part (2) to one quarter revolution, such that the nut (1) adopts a position relative to all of the parts (2, 3) that prevents the separation thereof.

5. The part according to claim 4, **characterized in that** it (2) is provided with an opening (18) configured to be able to receive the connecting and stop portion (12) of the nut (1) during the assembly of the parts to be assembled.

6. A set of parts to be assembled, **characterized in that** it comprises a first part (2) according to claim 4 or 5 and at least one other part (3), the or each of the other parts (3) to be assembled with the first part (2) being provided with a cutout (31) adapted to the shape of the nut (1).

7. A method for assembling a first part (2) according to claim 4 or 5 with one or more other parts (3), the or each (3) of the other parts (3) being provided with a cutout (31) adapted to the shape of the nut (1) and having inner edges (32, 33) making up the complementary means with which the means (15, 16) of the nut (1) limit the rotation of the nut (1) to one quarter revolution, the method comprising at least the following steps:
placing the first part (2) on the other part(s) (3) to be assembled, with the insertion of the nut (1) into the cutout (31) of the or each of the other parts (3) to be assembled,
screwing the screw (4) into the tapping (17) of the nut (1) or tapping the hole of the nut (1) using the screw (4), then
tightening the screw (4) by one quarter revolution so as to break the separable connections (13, 14), then stopping the rotation of the nut (1),
final tightening of the screw (4).

8. The method according to claim 7, **characterized in that**, before performing any assembly with one or more other part(s) (3), the screw (4) is engaged in the nut (1) only partially so as not to bear on the first part (2).

## Patentansprüche

1. Gussmutter (1) in einem einzigen Teil mit einem ersten Teil (2), der ausgelegt ist, um mit einem oder mehreren anderen Teilen (3) zusammengebaut zu werden, wobei die Mutter (1) hervorspringend auf dem ersten Teil (2) angeordnet ist, so dass sie mit einer Schraube (4) zusammenarbeiten kann, die dazu ausgelegt ist, die Einheit der Teile (2, 3), die zusammengebaut werden soll, zu durchqueren, **dadurch gekennzeichnet, dass** die Mutter (1) einen Mutterkörper (11) und einen Verbindungs- und Stoppteil (12) umfasst, der mit dem Mutterkörper (11) fest verbunden ist und an den ersten Teil (2) durch teilbare Verbindungen (13, 14) befestigt ist, wobei der Verbindungs- und Stoppteil (12) gewindegeschnitten ist oder ein Loch aufweist, das dazu ausgelegt ist, durch die Einführung der Schraube gewindegeschnitten zu werden, und Mittel (15, 16) umfasst, die dazu ausgelegt sind, mit zusätzlichen Mitteln (32, 33) zusammenzuarbeiten, die auf dem ersten Teil (2) oder einem der anderen Teile (3) vorgesehen sind, um die Drehung der Mutter (1) nach ihrer Entfernung vom ersten Teil (2) auf eine Vierteldrehung zu begrenzen, so dass die Mutter (1) eine Position mit Bezug auf die Einheit der Teile (2, 3) einnimmt, die die Trennung davon verhindert.

2. Mutter nach Anspruch 1, **dadurch gekennzeichnet, dass** der Gewindeschnitt (17) des Verbindungs- und Stoppteils (12) angepasst ist, damit die Schraube (4), wenn sie in den Gewindeschnitt (17) eingreift, auf dem ersten Teil (2) aufliegt, dann durch Spannung die stabilen Verbindungen (13, 14) der Mutter (1) zerbricht, um die Mutter (1) in Drehung zu versetzen.

3. Mutter nach Anspruch 1 oder 2, **dadurch gekennzeichnet, dass** sie aus dem gleichen Material wie der erste Teil (2) hergestellt ist.

4. Teil (2), der ausgelegt ist, um mit einem oder mehreren anderen Teilen (3) zusammengebaut zu werden, **dadurch gekennzeichnet, dass** er mit einer Gussmutter (1) aus einem einzigen Teil mit ihm versehen ist und vorspringend auf ihm angeordnet ist, um mit einer Schraube (4) zusammenarbeiten zu können, die dazu ausgelegt ist, die Einheit der Teile (2, 3), die zusammengebaut werden soll, zu durchqueren, und dadurch, dass die Mutter (1) einen Mutterkörper (11) und einen gewindegeschnittenen Verbindungs- und Stoppteil (12) umfasst oder ein Loch umfasst, das dazu ausgelegt ist, durch die Einführung der Schraube gewindegeschnitten zu werden, und fest mit dem Mutterkörper (11) verbunden ist und an den Teil (2) durch stabile Verbindungen (13, 14) befestigt ist, wobei der Verbindungs- und Stoppteil (12) Mittel (15, 16) umfasst, die dazu ausgelegt sind, mit zusätzlichen Mitteln (32, 33) zusammenzuarbeiten, die auf dem Teil (2) oder einem der anderen Teile (3) vorgesehen sind, um die Drehung der Mutter (1) nach ihrer Entfernung vom Teil (2) auf eine Vierteldrehung zu begrenzen, so dass die Mutter (1) eine Position mit Bezug auf die Einheit der Teile (2, 3) einnimmt, die die Trennung davon verhindert.

5. Teil nach Anspruch 4, **dadurch gekennzeichnet, dass** er (2) mit einer Öffnung (18) versehen ist, die angepasst ist, um im Laufe des Zusammenbaus der Teile, die zusammengebaut werden sollen, den Verbindungs- und Stoppteil (12) der Mutter (1) aufnehmen zu können.

6. Einheit von Teilen, die zusammengebaut werden sollen, **dadurch gekennzeichnet, dass** sie einen ersten Teil (2) nach Anspruch 4 oder 5 und mindestens einen anderen Teil (3) umfasst, wobei der oder jeder der anderen Teile (3), die mit dem ersten Teil (2) zusammengebaut werden sollen, mit einem Ausschnitt (31) ausgestattet ist/sind, der an die Form der Mutter (1) angepasst ist.

7. Verfahren zum Zusammenbau eines ersten Teils (2) nach Anspruch 4 oder 5 mit einem oder mehreren anderen Teilen (3), wobei der oder jeder (3) der anderen Teile (3) mit einem Ausschnitt (31) versehen ist/sind, der an die Form der Mutter(1) angepasst ist und innere Ränder (32, 33) umfasst/umfassen, die die zusätzlichen Mittel bilden, mit denen die Mittel (15, 16) der Mutter (1) die Drehung der Mutter (1) auf eine Viertelumdrehung begrenzen, wobei das Verfahren mindestens die folgenden Schritte umfasst:
Anbringen des ersten Teils (2) auf dem oder den anderen Teilen (3), die zusammengebaut werden sollen, wobei die Mutter (1) in den Ausschnitt (31) des oder jeder der anderen Teile (3), die zusammengebaut werden sollen, eingeführt wird,
Festschrauben der Schraube (4) im Gewindeschnitt (17) der Mutter (1) oder Gewindeschneiden des Lochs der Mutter (1) mit Hilfe der Schraube (4), dann
Anziehen der Schraube (4) um eine Vierteldrehung, um den Bruch der stabilen Verbindungen (13, 14) zu erzielen, und dann Stopp der Rotation der Mutter (1),
endgültiges Anziehen der Schraube (4).

8. Verfahren nach Anspruch 7, **dadurch gekennzeichnet, dass** vor jeder Durchführung eines Zusammenbaus mit einem oder mehreren anderen Teilen (3) die Schraube (4) nur teilweise in die Mutter (1) in Eingriff gebracht wird, um nicht auf dem ersten Teil (2) aufzuliegen.
